# FASCICULE DE BREVET EUROPEEN

(11) **EP 0 471 828 B1**
(45) Date de publication et mention de la délivrance du brevet: **03.07.1996**
(21) Numéro de dépôt: 91906091.3
(22) Date de dépôt: 07.03.1991
(51) Int. Cl.: G06K 13/08, G06K 17/00

(54) **APPAREIL DE LECTURE DE LA PISTE DE CARACTERES D'IDENTIFICATION D'UN CHEQUE**
EINRICHTUNG ZUM LESEN DER IDENTIFIKATIONSZEICHENSSPUR EINES SCHECKS
DEVICE FOR READING THE TRACK OF IDENTIFICATION CHARACTERS ON A CHEQUE

(30) Priorité: 08.03.1990 FR 9002945
(43) Date de publication de la demande: 26.02.1992
(73) Titulaire: SOCIETE D'APPLICATIONS GENERALES D'ELECTRICITE ET DE MECANIQUE SAGEM, F-75783 Paris Cédex 16 (FR)
(72) Inventeur: BRUN, Jean-Paul, F-95100 Argenteuil (FR); DOL, Christian, F-91190 Gif-sur-Yvette (FR); SARRADIN, Jean-Louis, F-95190 Fontenay-en-Parisis (FR)
(74) Mandataire: Bloch, Gérard
(86) Numéro de dépôt international: FR9100183
(87) Numéro de publication internationale: WO9114236

(56) Documents cités:
- FR-A- 2 169 422
- FR-A- 2 505 523
- FR-A- 2 515 390
- FR-A- 2 579 345
- US-A- 3 976 858
- US-A- 4 081 131

## Description

Il existe déjà des appareils et machines d'impression de chèque, permettant d'imprimer sur un chèque, au moins en un endroit, un montant de transaction, généralement en chiffres. Une fois imprimé et remis à son bénéficiaire, le chèque doit cependant être traité. En particulier, comportant, dans sa partie inférieure, une piste de caractères d'identification, par exemple des caractères magnétiques CMC7, représentatifs de l'identité bancaire du tireur, il faut lire cette piste, réaliser ainsi une "image-chèque" et exploiter ensuite cette image. Ce traitement doit pouvoir être effectué chez un commerçant, une banque ou ailleurs. Il existe des appareils effectuant ce traitement. Il en existe aussi qui ne procèdent qu'à la saisie et l'enregistrement de l'image-chèque, enregistrement devant être pris dans le sens de stockage, temporaire ou non, des données saisies.

Le besoin de tels appareils simplifiés s'était fait surtout ressentir chez les commerçants, en particulier ceux dont le volume des transactions n'est pas considérable. Une fois l'image-chèque saisie et enregistrée, il est facile de la transmettre à un centre de traitement, par tout moyen, soit par dépôt du support d'enregistrement soit par transmission du contenu du support d'enregistrement par tout autre moyen approprié de télétransmission, par exemple un modem et une ligne téléphonique, du réseau commuté ou spécialisée.

Le document FR-A-2 515 390 décrit un tel appareil simplifié qui comporte les caractéristiques mentionnées dans le préambule de la revendication 1.

Ces appareils simplifiés procèdent d'un principe de lecture de la piste d'identification des chèques par entraînement rectiligne relatif, le long de la piste, du chèque et d'un dispositif de lecture, par des moyens motorisés ou non, le chèque étant entraîné en déplacement dans une fente à la manière d'une carte bancaire dans un terminal pour cartes bancaires. Si la fente est trop large, les chèques risquent d'être pliés ou froissés et la lecture d'être erronée. Si la fente est trop mince, il peut être difficile d'y introduire les chèques.

Le document FR-A-2 169 422 décrit un autre type de lecteur de chèque dans lequel la lecture est effectuée sans mouvement du chèque par rapport au lecteur. Cet appareil comporte une platine de réception pour recevoir le chèque et des moyens pour provoquer un déplacement relatif du chèque et du dispositif de lecture.

La présente invention vise à pallier ces inconvénients des appareils de lecture simplifiés de l'art antérieur.

A cet effet, la présente invention concerne un appareil de lecture de la piste de caractères d'identification d'un chèque, comportant un bâti supportant :
- un dispositif de lecture des caractères d'identification,
- des moyens pour relier électriquement le dispositif de lecture à un support d'enregistrement des données de la piste,
- des moyens pour provoquer
   . un déplacement rectiligne relatif, le long de la piste d'identification, du chèque et du dispositif de lecture et donc la lecture de la piste,
   appareil caractérisé par le fait qu'il comporte une platine de réception agencée pour recevoir le chèque et, en position de lecture, coopérer avec un support du dispositif de lecture pour maintenir mécaniquement le chèque entre la platine et le support de lecture, la platine pouvant pivoter par rapport au support.

Dans une forme de réalisation particulièrement simplifiée, le dispositif de lecture est fixe en déplacement rectiligne et les moyens d'entraînement en déplacement relatif sont des moyens manuels.

Dans ce cas, il peut être ménagé dans la platine de réception un évidement de préhension du chèque permettant de le saisir manuellement et de le dégager de la platine pour l'entraîner en déplacement par rapport au dispositif de lecture.

Alors, le dispositif de lecture peut être monté dans le bâti et la platine peut être montée pivotante sur le bâti.

Dans d'autres formes de réalisation de l'appareil de l'invention, le dispositif de lecture est monté mobile en déplacement rectiligne sous l'action de moyens d'entraînement mécaniques.

Alors, le dispositif de lecture peut être monté dans un couvercle monté pivotant sur la platine de réception et comportant une fenêtre de passage de la tige d'un bouton de manoeuvre du dispositif de lecture.

Le couvercle peut être agencé pour recouvrir toute la platine de réception ou seulement une partie de celle-ci destinée à recevoir la portion du chèque comportant la piste d'identification.

Mais, l'appareil peut aussi comporter un bras de manoeuvre, un bras de lecture portant le dispositif de lecture et des moyens transformant un déplacement du bras de manoeuvre, de préférence vers la platine, en un déplacement du dispositif de lecture le long du bras de lecture.

Alors, le bras de manoeuvre et le bras de lecture peuvent être solidaires en déplacement vers la platine jusqu'à une position de lecture du bras de lecture, la poursuite du déplacement vers la platine du bras de manoeuvre, depuis sa position correspondant à la position de lecture du bras de lecture, entraînant le déplacement dans un sens du dispositif de lecture le long du bras de lecture et de la platine.

De préférence encore, des moyens de rappel entraînent le bras de manoeuvre dans un déplacement l'écartant de la platine qui entraîne le dispositif de lecture en déplacement dans l'autre sens le long du bras de lecture.

De préférence toujours, les deux bras de manoeuvre et de lecture sont montés pivotants sur le bâti autour d'un même axe et agencés pour être solidaires en pivotement sous l'action d'un ressort et être pivotés l'un vers l'autre contre l'action du ressort, le bras de manoeuvre porte une crémaillère engrenant avec un pignon monté sur le bras de lecture pour entraîner le dispositif de lecture le long du bras de lecture.

Dans une forme de réalisation intéressante de l'appareil de l'invention, le dispositif de lecture est une tête de lecture magnétique de la piste de caractères magnétiques CMC7 et il est prévu, dans l'appareil, un support d'enregistrement des données de la piste.

L'invention sera mieux comprise à l'aide de la description suivante de plusieurs formes de réalisation de l'appareil de lecture et d'enregistrement de l'invention, en référence aux dessins annexés, sur lesquels
- la figure 1 est une vue de côté d'une première forme de réalisation de l'appareil de l'invention, couvercle ouvert;
- la figure 2 est une vue de face du couvercle de l'appareil de la figure 1;
- la figure 3 est une vue de côté d'une deuxième forme de réalisation de l'appareil de l'invention, couvercle ouvert;
- la figure 4 est une vue de face du couvercle de l'appareil de la figure 3;
- la figure 5 est une vue de face d'une troisième forme de réalisation de l'appareil de l'invention, couvercle ouvert;
- la figure 6 est une vue en coupe transversale du couvercle de l'appareil de la figure 5;
- la figure 7 est une vue simplifiée de côté d'une quatrième forme de réalisation de l'appareil de l'invention, le bras de lecture en position de lecture et
- la figure 8 est une vue simplifiée de dessus de l'appareil de la figure 7.

Vont être maintenant décrites des formes de réalisation de l'appareil de lecture de l'invention destinées à saisir les caractères magnétiques de piste CMC7 de chèques. Il est clair que l'appareil de l'invention pourrait tout aussi bien comporter un dispositif de lecture d'autres pistes d'identification, comme les pistes OCRA et OCRB. De même, les formes de réalisation décrites ci-après comportent des moyens d'enregistrement intégrés. Mais l'appareil pourrait ne comporter que les moyens de lecture, les caractères lus étant transmis, pour stockage, à un support d'enregistrement extérieur.

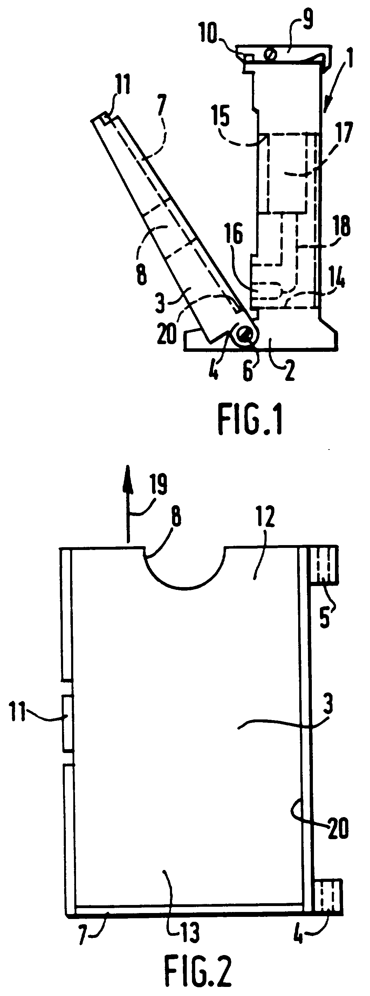

L'appareil des figures 1 et 2 comporte un bâti 1, avec un socle d'appui 2, et une platine de réception de chèque 3, montée pivotante sur le socle 2 du bâti, par deux tourillons 4, 5 de la platine, disposés latéralement de part et d'autre du socle 2 et un axe 6 chassé à travers le socle 1. Le bâti 1 et la platine 3 ont la même largeur, celle d'un chèque, mais la platine 3 est plus longue que le bâti. La longueur de la platine 3 est égale à celle d'un chèque. Elle comporte, d'un côté, et tourné vers le bâti, un rebord transversal 7 de butée transversale de chèque et, de l'autre côté, un évidement à bord arrondi 8, sensiblement médian, de préhension de chèque. Elle comporte encore, près de son axe d'articulation, un épaulement 20 de butée longitudinale de chèque. En position de fermeture, la platine 3 est rabattue sur le bâti 1 et maintenue dans cette position par un levier 9, monté pivotant sous l'action d'un ressort sur la partie supérieure du bâti 1 et comportant un bec de verrouillage 10 passé par-dessus une saillie médiane supérieure 11 de la platine 3. En position fermée, la portion latérale d'extrémité 12 de la platine 3, dans laquelle est ménagé l'évidement 8, ainsi que la portion latérale d'extrémité opposée 13, le long de laquelle s'étend le rebord de butée 7, font saillie de part et d'autre du bâti 1. Le bâti 1 comporte des logements 14, 15 de réception respectivement d'une tête de lecture magnétique 16 et d'un système électronique d'enregistrement simple 17, auquel la tête 16 est électriquement reliée par une voie bilatérale 18.

L'appareil est utilisé de la manière suivante.

La platine 3 étant écartée du bâti 1, l'utilisateur pose un chèque sur la platine, en butée contre les rebords 7 et 20, avec sa piste de caractères magnétiques CMC7 tournée vers le bâti, en partie inférieure. L'utilisateur rabat la platine 3 contre le bâti 1. Quand la platine 3 est verrouillée sur le bâti 1, le chèque est légèrement pincé et mécaniquement maintenu entre les deux. Le chèque étant en saillie hors du bord 8 de l'évidement de la platine, l'utilisateur le saisit manuellement et le tire, dans la direction de la flèche 19 de la figure 2, pour le dégager de l'appareil et provoquer un déplacement relatif de la tête de lecture 16 le long de la piste CMC7 du chèque. Les données de la piste sont lues par la tête 16 et enregistrées par le système d'enregistrement 17.

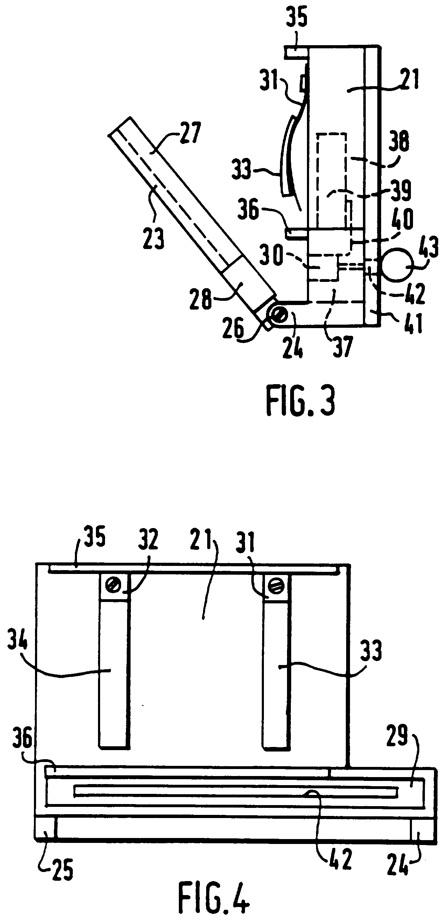

L'appareil des figures 3 et 4 est bien entendu assez similaire à celui des figures 1 et 2, mais cependant avec quelques différences structurelles et surtout un entraînement en déplacement relatif du chèque et de la tête de lecture non plus manuel mais mécanique. Cet appareil comprend une platine 23 de réception de chèque, formant bâti, et un couvercle 21, plus épais, monté pivotant sur la platine 23, par deux tourillons 24, 25 du couvercle, disposés latéralement de part et d'autre de la platine 23 et un axe 26 chassé à travers la platine 23. La platine 23 et le couvercle 21, dans leurs structures principales, ont une forme rectangulaire de largeur et de longueur respectivement égales à celles d'un chèque. La platine 23 comporte, des deux côtés, deux rebords transversaux 27 de butée de chèque. Les portions rectangulaires principales de la platine 23 et du couvercle 21, sont prolongées, le long de l'axe 26, par de plus petites portions rectangulaires 28, 29, celle 29 du couvercle servant de logement, en position de repos, à une tête de lecture magnétique 30. Sur le couvercle 21 sont fixées ici deux lames-ressorts 31, 32 d'appui de chèque, tournées vers la platine 23 et pourvues, chacune, d'un patin d'appui 33, 34. Le couvercle 21 comporte deux rebords longitudinaux parallèles 35, 36, l'un 35, le long du bord du couvercle opposé à celui des tourillons 24, 25, l'autre 36, à une distance du rebord 35 égale à la largeur de chèque. En position de fermeture, le couvercle 21 est rabattu sur la platine 23 et la recouvre totalement, les rebords 27 de la platine 23 et les rebords 35, 36 s'emboîtent les uns dans les autres pour encadrer le chèque pincé entre la platine 23 et les lames d'appui 31, 32. Le couvercle 21 comporte des logements 37, 38 de réception respectivement de la tête de lecture 30 et d'un système électronique d'enregistrement simple 39, auquel la tête 30 est électriquement reliée par une voie bilatérale 40. Le logement 37 de réception de la tête de lecture 30, dans sa paroi externe 41, opposée à la platine 23, comporte une fenêtre longitudinale 42, s'étendant parallèlement à l'axe 26, jusque dans la petite portion rectangulaire 29, de passage d'une tige d'un bouton de manoeuvre 43, en saillie hors de cette paroi 41, et duquel est solidaire la tête de lecture 30.

L'appareil est utilisé de la manière suivante.

La platine 23 étant posée, par exemple sur une table, et le couvercle 21 écarté d'elle, l'utilisateur pose un chèque sur la platine, entre les rebords 27, avec sa piste de caractères magnétiques CMC7 tournée vers le couvercle, en face de la fenêtre 42 et donc de la tête de lecture 30. L'utilisateur rabat le couvercle 21 contre la platine 23. Le chèque est encadré entre les rebords 27 de la platine et 35, 36 du couvercle et pincé entre la platine et les lames d'appui 31, 32. L'utilisateur saisit le bouton 43 et le fait coulisser le long de la fenêtre 42, dans un mouvement de va-et-vient pour provoquer un déplacement relatif de la tête de lecture 30 le long de la piste CMC7 du chèque. Les données de la piste sont lues et enregistrées par le système d'enregistrement 39, ici deux fois, à l'aller et au retour du bouton de manoeuvre 43.

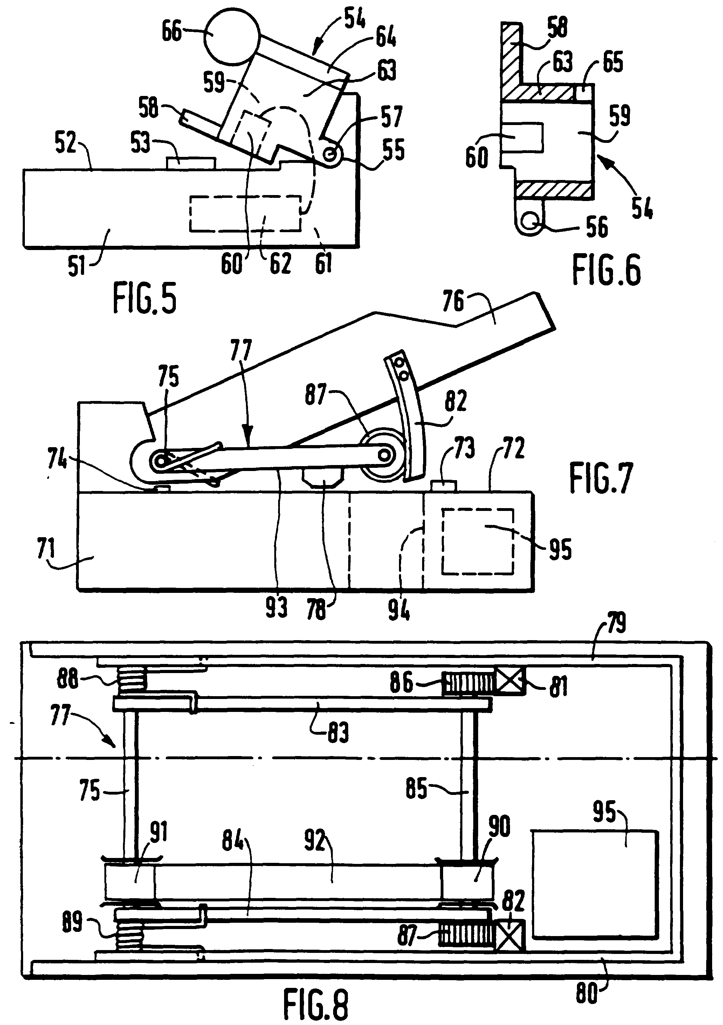

L'appareil des figures 5 et 6 est encore plus similaire à celui des figures 3 et 4 que ce dernier n'est similaire à celui des figures 1 et 2. Cet appareil comporte un bâti 51, sur lequel est formée une platine 52 de réception de chèque, avec deux rebords transversaux 53 de butée de chèque. Un couvercle 54 est monté pivotant sur le bâti 51 par deux tourillons 55, 56 du couvercle 54 et un axe 57 chassé à travers le bâti 51. Le couvercle 54 et le bâti 51 ont la même longueur mais, en position de fermeture, le couvercle, moins large que le bâti, ne recouvre que partiellement la platine. Un rebord longitudinal 58 fait saillie hors du couvercle pour, en position de fermeture, venir se plaquer contre la platine 52, entre les rebords 53 et pincer le chèque entre la platine et ce rebord 58. Tout comme dans l'appareil des figures 3 et 4, le couvercle 54 comporte un logement 59 de réception d'une tête de lecture magnétique 60 et le bâti 1 comporte un logement 61 de réception d'un système électronique d'enregistrement simple 62, auquel est reliée la tête de lecture 60. Le logement 59 de réception de la tête de lecture comporte, entre le carter 63 de ce logement et une plaque d'obturation 64, une fenêtre longitudinale 65, s'étendant parallèlement à l'axe 57, de passage d'une tige d'un bouton de manoeuvre 66, en saillie hors du carter 63 et de la plaque 64, et duquel est solidaire la tête de lecture 60.

Le fonctionnement de l'appareil des figures 5 et 6 est quasiment identique à celui de l'appareil des figures 3 et 4.

L'appareil des figures 7 et 8 comporte un bâti 71, sur lequel est ménagée une platine 72 de réception de chèque, avec deux rebords transversaux 73, 74 écartés l'un de l'autre de la longueur d'un chèque, et sur lequel sont montés pivotants, sur un même axe 75, un bras de manoeuvre 76 et un bras de lecture 77 portant une tête de lecture magnétique 78.

Le bras de manoeuvre 76 est ici constitué d'un cadre à deux montants latéraux 79, 80 auxquels sont fixées, ici, des crémaillères 81, 82.

Le bras de lecture 77 est ici aussi constitué d'un cadre à deux montants latéraux 83, 84 montés libres, d'un côté, sur l'axe de pivotement 75 et réunis, de l'autre côté, par une traverse 85. La traverse 85 porte à ses deux extrémités, et extérieurement au cadre de lecture, deux pignons dentés 86, 87 engrenant avec les deux crémaillères 81, 82, respectivement.

Entre les montants 79, 83 et 80, 84 des bras de manoeuvre 76 et de lecture 77, sur l'axe de pivotement 75, sont montés respectivement deux ressorts de torsion 88, 89. Leurs extrémités ont été recourbées sensiblement à angle droit pour s'étendre parallèlement à l'axe 75. Les extrémités des ressorts s'étendent respectivement dans deux plans sécants le long d'une droite transversale située en avant de l'axe de pivotement 75.

L'une des extrémités des ressorts 88, 89 est passée au-dessus du montant associé 83, 84 du bras de lecture 77, l'autre extrémité, croisée avec la première, étant passée sous le montant associé 79, 80 du bras de manoeuvre 76. La traverse 85 est montée tourillonnante dans les montants 83, 84 du bras de lecture et porte, entre les montants 83, 84, un galet 90 solidaire en rotation de la traverse 85. L'axe 75 porte, entre les montants 83, 84, un autre galet 91, libre en rotation. Une courroie continue 92 est tendue autour des galets 90, 91. La courroie 92 porte, fixée à son brin inférieur 93 tourné vers la platine 72, la tête de lecture magnétique 78 qui, en position de lecture du bras de lecture 77, affleure pratiquement la platine 72.

Quand l'utilisateur fait pivoter le bras de manoeuvre 76, d'abord en le levant, pour placer un chèque sur la platine 72, grâce aux ressorts 88, 89, le bras de lecture 77 reste solidaire en pivotement du bras de manoeuvre 76. Il en est de même quand le bras de manoeuvre 76 est redescendu jusqu'en position de lecture du bras de lecture 77, illustrée sur la figure 7, dans laquelle le bras de lecture 77, par la tête de lecture 78, est en appui contre le chèque. Quand l'utilisateur continue de manoeuvrer le bras de manoeuvre 76 pour le faire pivoter vers la platine 72, le bras de lecture 77 restant immobile, les ressorts sont contraints, les crémaillères 81, 82, qui s'engagent dans des fentes 94 ménagées dans le bâti 71, entraînent en rotation dans un sens le galet 90 et la courroie 92 entraîne la tête de lecture 78 en déplacement dans un sens le long du bras de lecture 77 et donc le long du chèque, en l'occurence le long de sa piste de caractères magnétiques CMC7. Quand l'utilisateur relâche le bras de manoeuvre 76, sous l'action des ressorts 88, 89, il pivote vers le haut en s'écartant du bras de lecture 77 jusqu'à une position de repos. Pendant ce retour du bras de manoeuvre 76 en position de repos, les crémaillères 81, 82 font tourner le galet 90 en sens inverse, ce qui provoque le retour, également en sens inverse, de la tête de lecture 78 le long du bras de lecture. Il suffit ensuite de soulever le bras de manoeuvre 76 et avec lui le bras de lecture 77, pour retirer le chèque dont les données de la piste CMC7 ont été lues ici deux fois par la tête 78 et enregistrées sur un support d'enregistrement d'un système électronique d'enregistrement simple 95.

## Revendications

1. Appareil de lecture de la piste de caractères d'identification d'un chèque, comportant un bâti (1; 21; 51; 71) supportant :
- un dispositif (16; 30; 60; 78) de lecture des caractères d'identification,
- des moyens (17; 39; 62; 95) pour relier électriquement le dispositif de lecture à un support d'enregistrement des données de la piste,
- des moyens (8; 42, 43; 65, 66; 76, 82, 87, 92) pour provoquer
. un déplacement rectiligne relatif, le long de la piste d'identification, du chèque et du dispositif de lecture et donc la lecture de la piste,
appareil caractérisé par le fait qu'il comporte une platine de réception (3; 23; 52; 72) agencée pour recevoir le chèque et, en position de lecture, coopérer avec un support (1; 21; 54; 77) du dispositif de lecture pour maintenir mécaniquement le chèque entre la platine et le support de lecture, la platine pouvant pivoter par rapport au support.

2. Appareil selon la revendication 1, dans lequel le dispositif de lecture (16) est fixe en déplacement rectiligne et les moyens d'entraînement en déplacement relatif sont des moyens manuels (8).

3. Appareil selon la revendication 2, dans lequel il est ménagé dans la platine de réception (3) un évidement (8) de préhension du chèque permettant de le saisir manuellement et de le dégager de la platine (3) pour l'entraîner en déplacement par rapport au dispositif de lecture (16).

4. Appareil selon la revendication 3, dans lequel le dispositif de lecture (16) est monté dans le bâti (1) et la platine (3) est montée pivotante sur le bâti (1).

5. Appareil selon la revendication 1, dans lequel le dispositif de lecture (30; 60) est monté mobile en déplacement rectiligne sous l'action de moyens d'entraînement mécaniques (42, 43; 65, 66).

6. Appareil selon la revendication 5, dans lequel le dispositif de lecture (30; 60) est monté dans un couvercle (21; 54) monté pivotant sur la platine de réception (23; 51, 52) et comportant une fenêtre (42; 65) de passage de la tige d'un bouton (43; 66) de manoeuvre du dispositif de lecture.

7. Appareil selon la revendication 6, dans lequel le couvercle (21) est agencé pour recouvrir toute la platine de réception (23).

8. Appareil selon la revendication 6, dans lequel le couvercle (54) est agencé pour recouvrir partiellement la platine de réception (52).

9. Appareil selon la revendication 5, dans lequel il est prévu un bras de manoeuvre (76), un bras de lecture (77) portant le dispositif de lecture (78) et des moyens (82, 87, 92) transformant un déplacement du bras de manoeuvre (76) en un déplacement du dispositif de lecture (78) le long du bras de lecture (77).

10. Appareil selon la revendication 9, dans lequel les bras de manoeuvre (76) et de lecture (77) sont solidaires en déplacement vers la platine (72) jusqu'à une position de lecture du bras de lecture (77), la poursuite du déplacement vers la platine (72) du bras de manoeuvre (76) depuis sa position correspondant à la position de lecture du bras de lecture (77) entraînant le déplacement dans un sens du dispositif de lecture (78) le long du bras de lecture (77) et de la platine (72).

11. Appareil selon la revendication 10, dans lequel des moyens de rappel (88, 89) entraînent le bras de manoeuvre (76) dans un déplacement l'écartant de la platine (72) qui entraîne le dispositif de lecture (78) en déplacement dans l'autre sens le long du bras de lecture (77).

12. Appareil selon la revendication 11, dans lequel les deux bras de manoeuvre (76) et de lecture (77) sont montés pivotants sur le bâti (71) autour d'un même axe (75) et agencés pour être solidaires en pivotement sous l'action d'un ressort (88) et être pivotés l'un vers l'autre contre l'action du ressort (88), le bras de manoeuvre (76) porte une crémaillère (82) engrenant avec un pignon (87) monté sur le bras de lecture (77) pour entraîner le dispositif de lecture (78) le long du bras de lecture (77).

13. Appareil selon l'une des revendications 1 à 12, dans lequel le dispositif de lecture est une tête de leture magnétique de caractères CMC7.

14. Appareil selon l'une des revendications 1 à 13, dans lequel il est prévu un support (17; 39; 62; 95) d'enregistrement des données de la piste.

## Patentansprüche

1. Vorrichtung zum Lesen einer Zeichenspur zur Identifizierung eines Schecks, mit einem Rahmen (1, 21, 51, 71), an dem angeordnet sind:
- eine Einrichtung (16, 30, 60, 78) zum Lesen der Identifizierungszeichen,
- Mittel (17, 39, 62, 95) zum elektrischen Verbinden der Leseeinrichtung mit einem Aufzeichnungsträger für die Daten der Spur,
- Mittel (8, 42, 43, 65, 66, 76, 82, 87, 92) zur geradlinigen Relativbewegung von Scheck und Leseeinrichtung entlang der Identifizierungsspur und daher zum Bewirken des Lesens der Spur,
genannte Vorrichtung **dadurch gekennzeichnet**,
daß sie eine Aufnahmeplatte (3, 23, 52, 72), eingerichtet zum Aufnehmen des Schecks, und, in Leseposition, zum Zusammenarbeiten mit einem Träger (1, 21, 54, 77) der Leseeinrichtung zum mechanischen Halten des Schecks zwischen der Platte und dem Träger aufweist, wobei die Platte bezüglich des Trägers schwenkbar ist.

2. Vorrichtung nach Anspruch 1, wobei die Leseeinrichtung (16) bei der geradlinigen Relativbewegung stationär bleibt und die Relativbewegungs-Antriebsmittel manuelle Mittel (8) sind.

3. Vorrichtung nach Anspruch 2, wobei in der Aufnahmeplatte (3) eine Scheck-Greif-Aussparung (8) ausgebildet ist, die ein Ergreifen des Schecks von Hand und damit Lösen von der Platte (3) ermöglicht, um ihn an der Leseeinrichtung (16) vorbeizubewegen.

4. Vorrichtung nach Anspruch 3, wobei die Leseeinrichtung (16) in den Rahmen (1) eingebaut ist und die Platte (3) schwenkbar an dem Rahmen (1) montiert ist.

5. Vorrichtung nach Anspruch 1, wobei die Leseeinrichtung (30, 60) beweglich angeordnet ist, während sie unter Einfluß mechanischer Antriebsmittel (42, 43, 65, 66) geradlinig bewegt wird.

6. Vorrichtung nach Anspruch 5, wobei die Leseeinrichtung (30, 60) in einer an der Aufnahmeplatte (23, 51, 52) schwenkbar angebrachten Haube (21, 54) angeordnet ist, und ein Durchlaßfenster (42, 65) für den Schaft eines Knopfes (43, 66) zum Bewegen der Leseeinrichtung aufweist.

7. Vorrichtung nach Anspruch 6, wobei die Haube (21) zum Abdecken der gesamten Aufnahmeplatte (23) eingerichtet ist.

8. Vorrichtung nach Anspruch 6, in der die Haube (54) zum teilweisen Abdecken der Aufnahmeplatte (52) eingerichtet ist.

9. Vorrichtung nach Anspruch 5, in der ein Betätigungsarm (76), ein die Leseeinrichtung (78) tragender Lesearm (77), und Mittel (82, 87, 92) vorgesehen sind, die eine Bewegung des Betätigungsarms(76) in eine Bewegung der Leseeinrichtung (78) entlang des Lesearms (77) umsetzen.

10. Vorrichtung nach Anspruch 9, wobei der Betätigungsarm (76) und der Lesearm (77) bei der Bewegung zur Platte (72) hin bewegungsgekoppelt sind, bis der Lesearm (77) eine Leseposition erreicht und die Fortsetzung der Bewegung des Betätigungsarms (76) zur Platte (72) hin von der Stellung ab, die der Lesestellung des Lesearms (77) entspricht, die Bewegung der Leseeinrichtung (78) in einer Richtung entlang des Lesearms (77) und der Platte (72) bewirkt.

11. Vorrichtung nach Anspruch 10, wobei Rückstellmittel (88, 89) den Betätigungsarm (76) in einer von der Platte (72) wegführenden Bewegung antreiben, die die Leseeinrichtung (78) in umgekehrter Richtung entlang des Lesearms (77) antreibt.

12. Vorrichtung nach Anspruch 11, wobei die beiden der Betätigung (76) und dem Lesen (77) dienenden Arme um dieselbe Achse (75) schwenkbar an dem Rahmen (71) angeordnet und so ausgebildet sind, daß sie unter dem Einfluß einer Feder (88) bewegungsgekoppelt verschwenkt werden und entgegen der Wirkung der Feder (88) aufeinander zu geschwenkt werden, und wobei der Betätigungsarm (76) eine mit einem am Lesearm (77) angeordneten Rad (87) kämmende Zahnstange (82) aufweist, um die Leseeinrichtung (78) entlang des Lesearms (77) anzutreiben.

13. Vorrichtung nach einem der Ansprüche 1 bis 12, wobei die Leseeinrichtung ein magnetischer Lesekopf für CMC7-Zeichen ist.

14. Vorrichtung nach einem der Ansprüche 1 bis 13, wobei einen Aufzeichnungsträger (17, 39, 62, 95) für die Daten der Spur vorgesehen ist.

## Claims

1. Apparatus for reading the track of identification characters on a check, comprising a support (1 ; 21 ; 51; 71) supporting :
- a device (16 ; 30 ; 60 ; 78) for reading the identification characters,
- means (17 ; 39 ; 62 ; 95) for electrically connecting the reading device and a support for writing the data of the track,
- means (8 ; 42, 43 ; 65, 66 ; 76, 82, 87, 92) for effecting a relative linear displacement, along the track of identification characters, of the check and the reading device and thus the reading of the track,
apparatus characterized in that it comprises a receiving plate (3 ; 23 ; 52 ; 72) arranged for receiving the check and, in reading position, cooperating with a support (1 ; 21 ; 54 ; 77) for the reading device in order to mechanically holding the check between the plate and the reading support, the plate being able to pivot with respect to the support.

2. Apparatus according to claim 1, wherein the reading device (16) is fixed in linear displacement and the relative displacement effecting means are manual means (8).

3. Apparatus according to claim 2, wherein a check seizing cut out (8) is provided in the receiving plate (3) enabling to seize the check manually and take it out of the plate (3) to displace it with respect to the reading device (16).

4. Apparatus according to claim 3, wherein the reading device (16) is mounted in the support (1) and the plate (3) is pivotably mounted on the support (1).

5. Apparatus according to claim 1, wherein the reading device (30 ; 60) is mounted to move with a linear displacement under the action of mechanically driving means (42, 43 ; 65, 66).

6. Apparatus according to claim 5, wherein the reading device (30 ; 60) is mounted in a cover (21 ; 54) pivotably mounted on the receiving plate (23 ; 51, 52) and comprising a window (42 ; 65) for the passage of the shaft of a buttom (43 ; 66) for actuating the reading device.

7. Apparatus according to claim 6, wherein the cover (21) is arranged for covering the whole receiving plate (23).

8. Apparatus according to claim 6, wherein the cover (54) is arranged for covering partially the receiving plate (52).

9. Apparatus according to claim 5, wherein an actuating arm (76), a reading arm (77), mounting the reading device (78), and means (82, 87, 92) transforming a displacement of the actuating arm (76) into a displacement of the reading device (78) along the reading arm (77) are provided.

10. Apparatus according to claim 9, wherein the actuating (76) and reading (77) arms are fast in displacement towards the plate (72) up to a reading position of the reading arm (77), the continuation of the displacement towards the plate (72) of the actuating arm (76) from its position corresponding to the reading position of the reading arm (77) effecting the displacement in a direction of the reading device (78) along the reading arm (77) and the plate (72).

11. Apparatus according to claim 10, wherein return means (88, 89) drive the actuating arm (76) into a displacement moving it aside from the plate (72), driving the reading device (78) into a displacement in the other direction along the reading arm (77).

12. Apparatus according to claim 11, wherein the two actuating (76) and reading (77) arms are pivotably mounted on the support (71) about a single axis (75) and arranged to be fast in pivoting movement under the action of a spring (88) and pivoted towards eachother against the action of the spring (88), the actuating arm (76) mounts a rack (82) engaging a pinion (87) mounted on the reading arm (77) to drive the reading device (78) along the reading arm (77).

13. Apparatus according to one of claims I to 12, wherein the reading device is a head for magnetically reading CMC7 characters.

14. Apparatus according to one of claims 1 to 13, wherein a support (17 ; 39 ; 62 ; 95) is provided for writing the data of the track.
